Europäisches Patentamt

(19) European Patent Office

Office européen des brevets

(11) Publication number: **0 222 461**
**B1**

(12) **EUROPEAN PATENT SPECIFICATION**

(45) Date of publication of the patent specification:
06.12.89

(21) Application number: **86201981.7**

(22) Date of filing: **12.11.86**

(51) Int. Cl.⁴: **C10G 11/18, B01J 8/18**

(54) Selective placement of a deflection means in a vertical elongated passageway equipped with a horizontal tee joint connection.

(30) Priority: **12.11.85 US 797347**

(43) Date of publication of application:
**20.05.87 Bulletin 87/21**

(45) Publication of the grant of the patent:
**06.12.89 Bulletin 89/49**

(84) Designated Contracting States:
**DE FR GB IT NL**

(56) References cited:
**US-A- 4 070 159**
**US-A- 4 414 100**

(73) Proprietor: **SHELL INTERNATIONALE RESEARCH MAATSCHAPPIJ B.V., Carel van Bylandtlaan 30, NL-2596 HR Den Haag(NL)**

(72) Inventor: **Parker, Wesley Alonzo, 10538 Idlebrook, Houston Texas 77070(US)**
Inventor: **Hardesty, Donald Ernest, 2210 Creek Road, Brookshire Texas 77423(US)**
Inventor: **Stanley, Jack Edwin, 21242 Park Royal Drive, Katy Texas 77450(US)**

(74) Representative: **Aalbers, Onno et al, P.O. Box 302, NL-2501 CH The Hague(NL)**

**Description**

The invention relates to an apparatus for passing combined phases of an admixture of a vapour phase and fine solid particles upward through a substantially vertical elongated passageway and forcing said combined phases to a second, horizontal elongated passageway positioned at a substantially right angle with respect to said vertical elongated passageway.

The invention especially relates to an apparatus used in the cracking of hydrocarbons in the presence of a catalyst, to reduce the molecular size of the hydrocarbons.

With the advent of new aluminosilicate catalysts, it has been found desirable to limit the residence time of the catalyst with the hydrocarbon in a fluid catalytic cracking reaction to only a period of time necessary to perform cracking. Usually, this residence time is no more than five seconds and usually less than three seconds.

In order to conduct continuous processing of the hydrocarbon oil, it is necessary to reuse the catalyst. This can be accomplished in a regeneration unit in communication with the riser reactor through various solid/vapour separators and stripping zones.

Separation of the fine catalyst particles and the hydrocarbon product are made in a separation unit, usually referred to as a vertical or horizontal cyclone separator, which openly communicates with the riser reactor. It is necessary to transfer the mixed solid/vaporous phase from the upper portion of the riser reactor to the separation unit.

A number of riser reactors transfer a combined solid particle catalyst phase and vapour phase in a right angle curve path or a substantially right angle curve path to a horizontal cross member in open communication with a cyclone separator. In United States patent specification No. 4 495 063 a type of riser reactor is described which comprises an interconnecting horizontal passageway for the intended passage of fluid from the riser reactor. In order to avoid the attrition via impact of the catalyst particles on the top of the riser reactor tube, the same is usually equipped with a cap located at a calculated distance above the intersection of the horizontal connecting conduit and the riser reactor. This cap is usually only an extension of the riser reactor pipe but can entail either a larger bonnet or an askewed surmounted void space.

One problem continually confronting the passage of catalysts and vapour in a conjunct passage upward through a riser reactor cracking tube is pressure drop. As the pressure drop mounts or rises in a riser reactor it becomes more difficult to provide a smooth consistent flow of catalyst and vapours up through the riser reactor tube. This invention seeks among others to mitigate problems of pressure drop in the riser reactor by the selective placement of deflection means, for instance a mechanical implant at a position in the riser tube somewhere opposite to the horizontal elongated passageway, or fluid injection means, such as spray or gas injection nozzles, which inject fluid in a direction relatively perpendicular to the vertical axis of the riser reactor and on a horizontal axis relatively the same as, or parallel to, the horizontal axis of the horizontal elongated passageway. Combinations of for instance a mechanical implant and fluid injection means are also possible.

The invention therefore relates to an apparatus for passing combined phases of an admixture of a vapour phases and fine solid particles upward through a normally substantially vertical elongated passageway and forcing said combined phases to a second, normally substantially horizontal elongated passageway positioned at a substantially right angle with respect to said vertical elongated passageway which apparatus comprises:

a) a vertical elongated passageway having a vertical axis situated in a substantially vertical upright position having two side walls, an imperforate top, and a bottom portion, wherein said bottom portion of said elongated passageway is provided with inlet means to permit entry of said phases into said vertical upright elongated passageway;

b) a relatively horizontal elongated passageway situated at a substantially right angle to said vertical elongated passageway and interconnecting and communicating openly with the first of said two side walls of said vertical elongated passageway at the upper portion of said vertical elongated passageway to form a tee joint interconnection wherein a portion of said vertical elongated passageway is situated below said horizontal passageway and a portion of said vertical elongated passageway is situated above said horizontal passageway, wherein said above portion terminates at said imperforate top, and wherein said relatively horizontal elongated passageway communicates with, at the other extreme, a solid particle-vaporous phase separation means, and

c) a deflection means selectively located juxtaposed or attached to said second side wall at an elevation at least as high as the lowest interconnecting point of said tee joint interconnection of said relatively horizontal passageway with said vertical passageway and wherein said deflection means acts to aid the volume of said fine solid particles transferred from said vertical elongated passageway to said relatively horizontal elongated passageway and acts to prevent the backflow of said fine solid particles from said portion of said vertical elongated passageway defined as above said relatively horizontal elongated passageway to said portion of said vertical elongated passageway defined as below said horizontal passageway.

The invention especially relates to an apparatus as described before wherein said deflection means is

2

a mechanical implant attached to and protruding from the second wall and selectively situated opposite to said relatively horizontal elongated passageway, the center of the deflection means preferably placed on said vertical elongated passageway, at the same height as the horizontal plane through the central longitudinal axis of said relatively horizontal elongated passageway.

The pressure drop in the apparatus as described before, for instance a riser reactor, is significantly reduced by the selective placement of the mechanical design implant of this invention. In a riser reactor hydrocarbonaceous gas or vapour is passed upward in the presence of fine particulate catalysts to achieve the catalytic cracking of the hydrocarbon in the gaseous material to hydrocarbon of smaller molecules. With the advent of new aluminosilicate zeolite catalyst, the residence time in the riser reactor is a critical factor to consider in the cracking procedure. It is desired that the catalyst be in contact with the gas or vapour material for only a period of time necessary to perform the cracking. Any extension of this time results in undue coking of the catalyst and possible physical damage to the catalyst surface. For this reason the residue time in the riser reactor should preferably be between 1 and 5 seconds and most preferably between 2 to 3 seconds.

The mechanical implant of this invention is most preferably a hollow or solid wedge-like structure. It is also contemplated that a selectively located shelf or angle iron can be utilized as the male protrudance or flow deflection means extending from the wall opposes to the tee connection to accomplish mitigation of the pressure drop in the riser reactor. The selective placement and location of the flow prevention means relative to the horizontal tee joint is critical to reducing pressure drop. The riser reactor has two elongated side walls even though both connect to form a continuous circular interior of the riser reactor. The first of these side walls interconnects and is in open communication with the horizontal tee joint. The second of the side walls is relatively imperforate (with the possible exception of entry lines of feed and catalyst in the bottom of same) and opposes the first side wall. The flow prevention means is selectively attached to the wall opposed to the tee joint connection. The attachment may be by any means known in the art, such as welding or a fastening securement means, with welding being the easiest and most feasible method of attachment. The minimum height of the selective location of the back flow prevention means is placement opposed to the lowest point of the intersecting tee joint connection while the maximum height of the selective location is preferably lower than the highest point of the intersecting tee joint connection. Surprisingly, if the selective height falls below the required minimum, the implant will simply not have a positive effect on the pressure drop while placement at a height above the maximum greatly reduces the efficiency of the implant to mitigate pressure drop.

The high activity aluminium silicate catalyst currently used in FCC processing requires quick disengagement from the cracked hydrocarbon product. This invention provides the advantage of having a smaller disengaging device necessary to accomplish this task. As shown in the instant example illustrative of this invention, the pressure drop differential reduction across the riser reactor decreases with an increase in the air flow rate.

The invention further especially relates to an apparatus as described before wherein said deflection means comprises a fluid inlet injection means selectively located juxtaposed or attached to said second side wall and situated to inject fluid in a direction substantially perpendicular to said vertical axis of said vertical elongated passageway and to project said fluid into said relatively horizontal elongated passageway, wherein said select location of said fluid inlet means is above said portion of said vertical elongated passageway located below said tee joint interconnection and below said portion of said vertical elongated passageway located above said tee joint interconnection.

Pressure drop in the apparatus as described herein before, for instance a riser reactor is significantly reduced by the selective injection of fluid (either as a vapour or a liquid) in the riser reactor from a selectively situated fluid injection means.

The pressure drop is reduced in the riser reactor as a direct derivative of injecting a fluid at a selective location in the riser reactor. If the riser reactor is described as having (1) a lower portion defined by a distance lower than the tee joint discharge tube and higher than the bottom of the bottom most portion of the riser reactor and (2) an upper portion defined by the riser reactor lower than the imperforate top and higher than the highest portion of the tee joint interconnection, then the selective location for the fluid injection means is intermediate these lower and upper distances. If selective location of the fluid injection means is described relative to the tee joint discharge conduit, then it will be situated at a point in a horizontal axis plane of the tee joint connection, or alternatively in a plane parallel to the horizontal axis of the tee joint connection. The fluid injection means is selectively situated so that fluid egressing therefrom passes in a flow path substantially perpendicular to the vertical axis of the riser reactor tube. Again, the selective height of the fluid injection means relative to the riser reactor length is at a point higher than the interconnection of the lowest member of the horizontal tee joint connection with the riser reactor and lower than the highest point of the horizontal tee joint connection with the riser reactor.

The fluid of this invention can be either a vapour or a liquid with vapour being the preferred species. The means by which vapour is added to the riser reactor is by a fluid injection means inclusive of a gas injection nozzle, lower pressure drop nozzles, i.e. having a pressure of less than 0.7 bar, contoured apertures or slits in the side walls or connected to the side walls of the riser, a bank of a multiplicity of small nozzles, perforated plates and the like. The vapour injection means provide vapour at relatively low velocities, i.e. 12 m/sec to 182 m/sec, to transmit the momentum from the vapour to the downflowing catalyst.

Caution must be exercised in that the vapour velocity not become too high, i.e. less than 182 m/sec to cause the vapour to affirmatively penetrate the upflow of catalyst and thereby render the ingress of the vapours as ineffective or even detrimental. The vapour which is added to the riser reactor is preferably steam, an inert gas, recycle gas or combinations of same.

Where the fluid is a liquid, the force which provides incentive for the downflowing catalyst particles to pass to the horizontal tee joint connection is the sudden vaporization of the liquid to a vapour. It is therefore preferred that the liquid be entered to the riser reactor in relatively small droplets, which encourage rapid evaporation. The preferred droplet size is from 100-500 microns with the lower size droplets being the most preferred. The fluid injection means for the liquid will thus differ from the fluid injection means for admission of vapour to the riser reactor. Some type of liquid injection means include atomization nozzles, fog-pattern nozzles, spray nozzles and the like. The pressure drop across the nozzles is preferably between 3.5 and 7 bar with a higher pressure drop being preferred. The quantity of liquid added is dependent only on the capacity of the cyclone separation unit. Types of liquid will comprise recycle liquids, other hydrocarbons, water, recycle water, combined water-hydrocarbon phases, with or without atomization. Although not preferred within the scope of this invention it is feasible that the liquid be added through a non-atomizing nozzle with a low liquid velocity.

The speed at which vapour enter the riser reactor from the fluid injection means is at a velocity of from about 12 m/sec to about 182 m/sec. The preferred velocity of entry of the vapour is about 12 m/sec to about 61 m/sec, although the actual most preferred speed will be dependent upon the pressure drop existent in the riser reactor and the speed of upflow of the catalyst particles. And the latter may be dependent upon the degree of coke which has depleted the activity of the cracking catalyst. The speed of entry of the liquid to the riser reactor is irrelevant to operability with the critical factor of liquid admission being droplet size (100-500 microns) and pressure drop (3.5 to 7 bar).

It was surprisingly discovered that the injection of a vapour or liquid inert to the cracking process of a petroleum feedstock greatly reduces the pressure drop existent in a riser reactor having a horizontal tee joint connection. It is hypothesized that the reason for this is that injection of the fluid stream not only gives incentive for the gasiform and catalyst particles to laterally flow from the riser reactor to the tee joint connection but also prevents the backflow of catalyst particles down the side of the riser reactor opposite the horizontal tee joint connection.

Again, high activity aluminium silicate catalyst currently used in FCC processing requires quick disengagement from the cracked hydrocarbon product. This invention provides the advantage of having a smaller disengaging device necessary to accomplish this task. As shown in the instant example, illustrative of this invention, the pressure drop differential reduction across the riser reactor decreases with an increase in the air flow rate.

The feed material to the riser reactor is normally heated to a significantly high enough temperature to make the feed fluid for pumping introduction into the riser reactor. It is preferred that the feed be entered to the riser reactor as a mixed phases feed with a preheat temperature as high as 371 to 427 °C. The catalyst derived from the regeneration system is admixed with the feed material, the former having a very high temperature (such as 538 °C) to act as a heat sink for the hydrocarbon feed material. The vapour velocity in the riser reactor will usually comprise between 8 and 11 meter per second, but may range up to 30 meter per second or higher. This velocity should be calculated to provide contact of the catalytic material with the vapour phase for a period of time only for a duration sufficient to complete the cracking of the larger hydrocarbon molecules to smaller hydrocarbon molecules and to mitigate the build up of coke on the catalyst material.

The pressure in the riser reactor may range from 0.7 to 2.4 bar. The rato of feed hydrocarbon to catalyst will depend upon the variety of mineral oil (feedstock) to be cracked but will normally be within the range of 3 to about 15.

The riser reactor is described and defined herein as a vertical elongated passageway tube having a vertical axis and a length to diameter ratio of at least 10 and more preferably between 25 and 30. Before the catalyst and vapour phase ascends to the top of the riser reactor, a horizontal tee joint comprising a horizontal elongated tube communicates openly with the riser reactor. The distance from the top of the riser reactor to the tee joint interconnection will vary depending on the diameter and height of the riser reactor. It should be noted, however, that the cap for the riser reactor should be of sufficient height above the tee joint so as to avoid or mitigate catalyst attrition on the top portion of the riser reactor and thereby eliminate metal fatigue. It is also contemplated within the scope of this invention that the cap may be askewed at an angle so as to further eliminate attrition wear. Also, an inverted wedge may be placed at the top of the riser reactor.

The intersection of the tee joint with the riser reactor is preferably made at a 90° angle. However, in order to better position the respective horizontal or vertical cyclone separator with respect to the riser reactor, the horizontal connecting tube or passageway may be placed at an angle of less than 90° with respect to the vertical axis of the riser reactor. This will act to eliminate accumulation of solid particulate catalytic material in the horizontal connecting passageway and thereby prevent decomposition of the catalyst and fire hazards. The formed resultant angle can be an acute angle of the horizontal passageway with respect to the vertical axis of the riser reactor of between 89° to 75°. The horizontal passageway may also be equipped with certain flow deflection means to avoid attrition via the high speed catalyst particles impact on the same situs of the horizontal passageway (usually in the top of same juxtaposed to open communication with the riser reactor).

The invention will now be further described with reference to the figures.

Figure 1 is a side view of a riser reactor with a relatively horizontal tee joint connection as utilized in the prior art (no implant).

Figure 2 is a side view of a riser reactor with a mechanical implant of this invention and backflow prevention acquired derivative thereof.

Figure 3 is a top plan elevation view looking downward through the top of the riser reactor.

Figure 4 is a side view of a riser reactor with a relatively horizontal tee joint interconnecting the riser reactor and the fluid injection means selectively situated juxtaposed or attached to the side opposite the relatively horizontal tee joint interconnection.

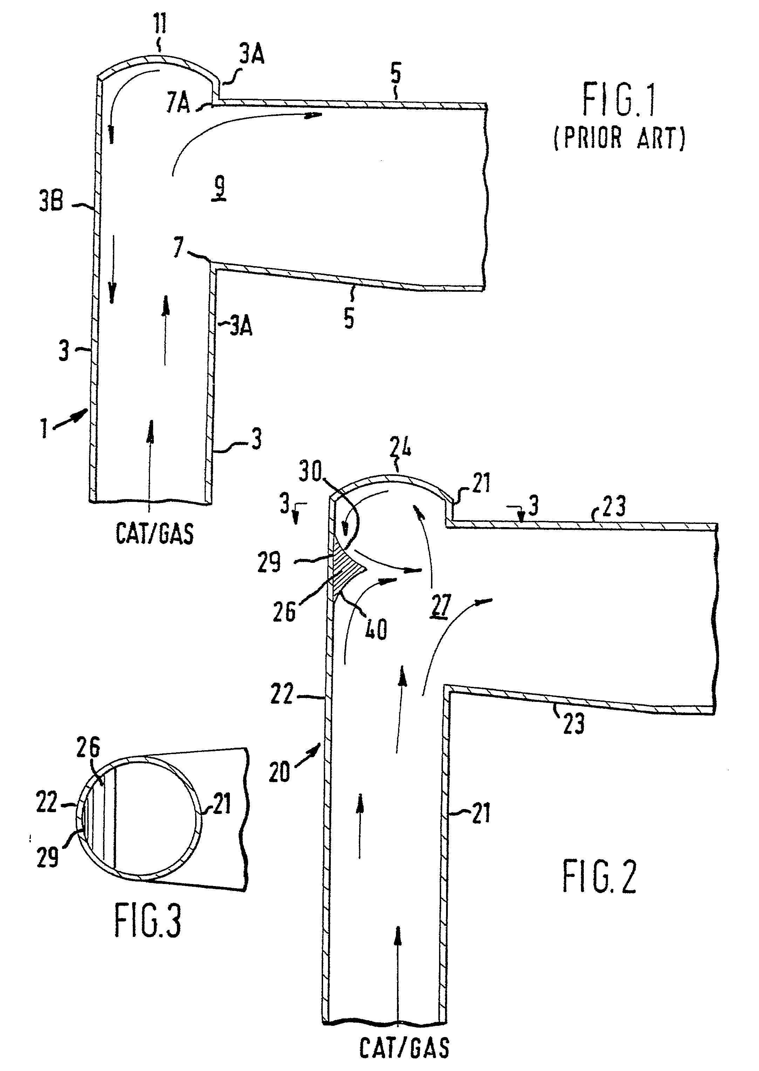

Figure 1 shows a riser reactor 1 having two side walls 3. Usually these side walls are of circular nature and will interconnect one another to make a geometric circle enclosing the riser reactor. One of the side walls 3A is in interconnection with a horizontal tee joint 5 at points 7 and 7A. Thus, the horizontal passageway communicates with riser reactor 1 at open communication 9. The second wall of the riser reactor 3B is relatively imperforate and again, the riser reactor is usually of a curved nature. The flow of catalyst material is depicted by the arrows. it can clearly be seen that the gas and solid materials contact the interior portion of top cap 11 of riser reactor 1 and flow back down imperforate wall 3B of the riser reactor. This creates problems in pressure drop which are mitigated or vitiated by this invention.

Figures 2 through 4 demonstrate and exemplify the simple yet novel mechanical implant of this invention to reduce pressure drop problems. Riser reactor 20 has two side walls 21 and 22. Side wall 21 is in open communication with horizontal passageway 23 at 27. Imperforate side wall 22 communicates with side wall 21 via cap 24. The passage of catalyst and gas is upward (inlet of same at bottom of the riser reactor is not shown) through the riser reactor as shown by the arrows. Both contact the top portion of riser reactor 24 (as in Figure 1, cap 11) but do not flow down the back side of imperforate wall 2 as a result of implant wedge 26.

Therefore the downflow prevention means or male protrudance normally has on one side a surface complementing the curve of the curved section of the relatively imperforate side wall opposed to the tee joint connection. It is preferred that this connection be made to no more than 50% of the circular vessel and that such connection be made at a point juxtaposed and opposite to the open communication with the horizontal elongated passageway.

The shape of the flow prevention means may comprise either a right angle triangle with a sloped hypotenuse or an isosceles triangle with two or three curved lines, preferably in concave shape. The flow diversion means will preferably have a solid geometry configuration and should be designed to give the greatest incentive to divert the flow of catalyst up the riser reactor to the open communication with the horizontal elongated tube and also to divert the flow of catalyst down from the top of the riser reactor to open communication into the horizontal elongated tube. In any event, the catalyst descending from the top of the riser reactor will be substantially prevented from descending into the riser reactor passageway below the point of the tee joint connection. In fact, without use of this flow prevention means, the catalyst particles and vapour will flow as shown in the Figure 1. Without this selective placement of the implant the catalyst particles will flow down the back or imperforate wall of the riser reactor and thereby increase pressure drop. This inhibits the upward passage of vapour and solid particles through the riser reactor and thereby further increases pressure drop. The simply and easy to retrofit mechanical implant acts to mitigate pressure drop in a standard riser reactor having a horizontal tee joint therein.

The protrudance or the flow prevention means into the open area off the riser reactor should be equal to no more than one third of the diameter of the riser reactor. The minimum distance of protrudance should be sufficient to eliminate the back flow of catalyst particles but should not fall below one tenth (10%) of the diameter of the riser reactor elongated tube. The volume space occupied by the back flow prevention means over a cross section of the riser reaction tube should be between 5 and 30%. The height of the back flow prevention means is ascertained by the minimum communication height the horizontal tee joint.

The wedge is shown in Figure 2 as a solid isosceles triangle with sloping sides to give more direction to the catalyst flow both off top cap 24 and up through the irser reactor 20 to open communication with space 27. Concave sloping side 30 act as flow direction means as well as a backflow prevention means. Concave sloping side 40 act also as a gas/solids flow direction device to improve open communication of the vertical elongated riser-reactor with the relatively horizontal passageway. Any other configuration of the triangle can be retrofitted into the riser reactor (i.e. equilateral) but the isoscales and right triangles are preferred.

The flow prevention means or male protrudance 26 can have the configuration of a right angle triangle with a relatively flat and straight bottom but having a hypotenuse with a concave configuration as shown by side 30 of isosceles triangle 26 of Figure 2. Even a simple planar angle iron could be utilized, although the same is not preferred. The back portion of wedge 26 is denoted as 29 and interconnects imperforate side wall 22 by which securement is made via welding or fastening means, whichever is most desired. As shown in Figure 3, the configuration of side 29 is most preferably the complement of the curvature of imperforate wall 22 so as to provide a good seal between unit 29 and 22 and to prevent the backflow of any catalyst particles between these two entities.

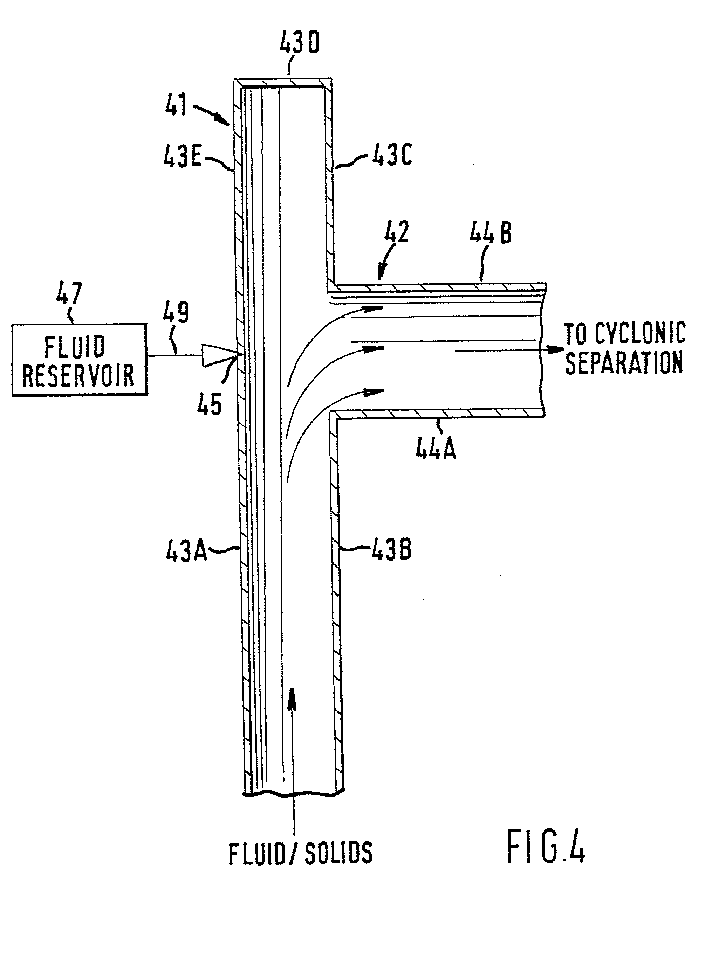

In Figure 4 a riser reactor 41 is shown having a relatively open perpendicular communication with a relatively horizontal tee joint discharge conduit 42. Fluid and solid materials pass upwardly through the riser reactor on either side of riser reactor 43A and 43B and pass into open communication with horizontal tee joint horizontal tube 42 having sides 44A and 44B. While it is shown that side 44A and 44B interconnect with side 43B and 43C at a substantially perpendicular relationship, this angle may actually be an acute angle of between 89° and 75° with respect to a vertical axis of riser reactor tube 41. A large portion of the fluid and solid material, in a conventional riser reactor equipped with a horizontal tee joint interconnection, flows into open communication with the horizontal tee joint conduit. A small but important portion will pass upwardly and contact imperforate top 43D and descend as a backflow alongside either conduits 43E or 43C. This backflow along sidewall 43E-43A results in an undue and undesirable pressure drop in the riser reactor thereby preventing upflow of the fluid and solid materials. The solution to this backflow problem, i.e. a reduction in the pressure drop in the riser reactor 41, is placement of fluid injection means 45 which preferably penetrates sidewall 43E-43A or is at least situated juxtaposed thereto. The fluid injection means can be a nozzle, bank of nozzles, valves, fog nozzle, multiple perforations or contoured apertures with compressed inert fluid (either vapour or liquid) being forced therethrough. The fluidization means for admission of a vapour or fluid is preferably a bank of retrofitted gas injection nozzles in intercommunication with fluid access reservoir 47 via supply conduit 49. The fluid injection means for admission of a liquid fluid is preferably at least one fog pattern nozzle which communicates with liquid access reservoir 47 via supply conduit 49. The situs of the fluid injection means will bifurcate one side of the riser reactor into sides 43E and 43A. The situs should be located at a position such that side 43E is preferably not shorter than side 43C and that side 43A is preferably not shorter than side 43B.

A further embodiment of this invention resides in a method for reducing pressure drop in riser reactor having an upflow of catalyst and hydrocarbon vapours and being in open communication with a relatively horizontal tee joint connection passageway which comprises passing said catalyst and hydrocarbon vapours up through said riser reactor at a temperature of about 500 °C, especially 538 °C, to about 815 °C and a pressure of about 1 bar to about 100 bar to crack said hydrocarbons to smaller hydrocarbon molecules, passing said catalyst and said hydrocarbon vapour from said riser reactor to said tee joint connection passageway at an angle substantially perpendicular to said riser reactor wherein a mechanical implant has been placed at a point opposite the horizontal tee joint, or wherein fluid is injected through a fluid injection means, to said riser reactor, in a substantially perpendicular injection flow path with respect to the vertical axis of said riser reactor and in a flow path substantially parallel with respect to the horizontal axis of said tee joint connection passageway.

Illustrative Embodiments

In a first illustrative embodiment, a scaled model as shown in Figure 2 was prepared with transparent sides to follow the flow of the catalyst and gas phases through the riser reactor into the horizontal connecting tube and then into a downstream cyclone separator. The temperature and pressure were not synonymous with a commercial embodiment in light of the use of nitrogen or air as the gaseous phase in replacement of a vapourized hydrocarbon. The pressure drop was determined at the end of the riser reactor and at the horizontal tee joint connection in an embodiment commensurate with Figure 1 (prior art). The balance of the differential pressure was increased by the downstream cyclone. The conditions of air quantity and solids and solids to air are set forth in Table 1.

**Table I**

| Conditions | | | % dp | |
|---|---|---|---|---|
| Air nl/s | Solids kg/s | Solids/air w/w | End riser | Tee |
| 45.1 | .26 | 4.5 | 50 | 27 |
| 45.1 | .18 | 6.5 | 49 | 30 |
| 45.1 | .45 | 7.8 | 50 | 31 |
| 61.6 | .26 | 3.3 | 35 | 23 |
| 61.6 | .38 | 4.7 | 38 | 30 |
| 61.6 | .45 | 5.7 | 39 | 31 |
| 75.0 | .26 | 2.7 | 29 | 19 |
| 75.0 | .38 | 3.9 | 38 | 26 |
| 75.0 | .45 | 4.7 | 40 | 25 |
| 88.0 | .26 | 2.4 | 32 | 23 |
| 88.0 | .38 | 3.5 | 30 | 27 |
| 88.0 | .45 | 4.2 | 29 | 30 |

The scaled up model was then installed with a contoured wedge of this invention (Figures 2-3) that opposed and projected towards the horizontal tee joint and the total pressure drop differential with the wedge implant was recorded as follows in Table 2 which also shows for comparison the total dp of the riser reactor without the implant.

**Table 2**

| Air nl/s | Solids kg/s | Total dp with implant | Total dp without implant | Δdp |
|---|---|---|---|---|
| 45.1 | 0 | 2.5 | 3.6 | 1.1 |
| 45.1 | .26 | 3.1 | 5.2 | 2.1 |
| 45.1 | .38 | 4.8 | – | – |
| 45.1 | .45 | 5.3 | – | – |
| 66.1 | .26 | 5.1 | 7.8 | 2.7 |
| 66.1 | .38 | 5.9 | 8.9 | 3.0 |
| 66.1 | .45 | 6.7 | 10.5 | 3.8 |
| 81.5 | .26 | 7.5 | 8.1 | 0.6 |
| 81.5 | .38 | 8.3 | 9.9 | 1.6 |
| 81.5 | .45 | 9.6 | 10.5 | 0.9 |
| 90.6 | .26 | 8.6 | 9.9 | 1.3 |
| 90.6 | 50.38 | 9.3 | 10.2 | 0.9 |
| 90.6 | 60.45 | 10.2 | – | – |

This showing is tantamount to processing of a gaseous material inclusive of a hydrocarbon, which is to be cracked. It can clearly be seen that as the speed of the air flow increased up through the riser reactor, the reduction in the pressure drop mitigated. For example, the Δdp was much higher at speeds of 66.1 ml/s than the Δdp at air speeds of 81.5 or 90.6 ml/s. It is unexpected that the pressure drop differential was consistently so low simply derivative of selective placement of the mechanical implant of this invention.

In a second embodiment a clear plastic scaled model of a riser reactor with a horizontal tee joint connection was maintained with a fluid nozzle injection means at a point substantially in an equal or parallel horizontal plane with the interconnection of the horizontal passageway with the vertical upflow passage. The temperature and pressure were essentially room temperature, which is not synonymous with a commercial embodiment, in light of the use of nitrogen as the gaseous phase in replacement of vaporized hydrocarbon. The pressure drop was determined at the end of the riser reactor. Table 1 shows the variance in the riser reactor with a 0.95 cm nozzle, a 0.62 cm nozzle and in a comparative riser reactor without the existence of the aire injection nozzles.The gas flow rate of the stream being emitted from either of the two nozzles and results derivative of the illustration are also shown in Table 3.

Table 3

| Air/N$_2$ nl/s | Solids kg/s | Total dp without nozzle | Total dp with .95 cm nozzle | Total dp with .63 cm nozzle | Gas flow rate nl/s |
|---|---|---|---|---|---|
| 45.1 | 0 | 3.6 | A | A | 0 |
| 45.1 | .26 | 5.4 | 3.4 | 4.8 | 2.7 |
| 45.1 | .38 | 6.1 | 4.9 | 4.7 | 2.7 |
| 45.1 | .45 | 7.5 | A | 5.7 | 2.7 |
| 45.1 | .26 | A | 5.5 | 5.8 | 0 |
| 45.1 | .26 | A | 4.0 | 5.1 | 0.9 |
| 45.1 | .26 | A | 3.8 | 4.6 | 1.8 |
| 45.1 | .26 | A | 3.4 | 4.8 | 2.7 |
| 45.1 | .26 | A | 3.6 | 5.3 | 3.6 |
| 45.1 | .26 | A | 4.2 | 5.5 | 4.5 |
| 45.1 | .26 | A | 4.5 | 5.5 | 5.4 |

A = Not determined.

The existence of both the 0.95 cm and 0.63 cm nozzles and ingress of fluid therefrom substantially reduced the pressure drop through the riser reactor.

**Claims**

1. An apparatus for passing combined phases of an admixture of a vapour phase and fine solid particles upward through a normally substantially vertical elongated passageway and forcing said combined phases to a second, normally substantially horizontal elongated passageway positioned at a substantially right angle with respect to said vertical elongated passageway which apparatus comprises:

a) a vertical elongated passageway having a vertical axis situated in a substantially vertical upright position having two side walls, an imperforate top, and a bottom portion, wherein said bottom portion of said elongated passageway is provided with inlet means to permit entry of said phases into said vertical upright elongated passageway;

b) a relatively horizontal elongated passageway situated at a substantially right angle to said vertical elongated passageway and interconnecting and communicating openly with the first of said two side walls of said vertical elongated passageway to form a tee joint interconnection wherein a portion of said vertical elongated passageway is situated below said horizontal passageway and a portion of said vertical elongated passageway is situated above said horizontal passageway, wherein said above portion terminates at said imperforate top, and wherein said relatively horizontal elongated passageway communicates with, at the other extreme, a solid particle-vaporous phase separation means; and

c) a deflection means selectively located juxtaposed or attached to said second side wall at an elevation at least as high as the lowest interconnecting point of said tee joint interconnection of said relatively horizontal passageway with said vertical passageway and wherein said deflection means acts to aid the volume of said fine solid particles transferred from said vertical elongated passageway to said relatively horizontal elongated passageway and acts to prevent the backflow of said fine solid particles from said portion of said vertical elongated passageway defined as above said relatively horizontal elongated passageway to said portion of said vertical elongated passageway defined as below said horizontal passageway.

2. The apparatus of claim 1 wherein said deflection means is a mechanical implant attached to and protruding from the second wall and selectively situated opposite to said relatively horizontal elongated passageway, the center of the deflection means preferably placed on said vertical elongated passageway at the same height as the horizontal plane through the central longitudinal axis of said relatively horizontal elongated passageway.

3. The apparatus of claim 2 wherein said deflection means is located attached to and protruding from the second of said two side walls at an elevation of at least as low as the highest interconnecting point of said relatively horizontal passageway with said vertical passageway.

4. The apparatus of claims 2 or 3 wherein said deflection means comprises a right angle planar surface having a semi-circular reverse side for attachment to the interior of said vertical elongated passageway, a right triangle with the hypotenuse comprising a curved line having a concave slope, or a isosceles triangle with two even sides protruding from the interior of said vertical elongated passageway and curved lines configuring a concave slope.

5. The apparatus of claims 2 to 4 wherein said deflection means extends for a distance equal to up to one third of the diameter of the vertical elongated passageway which constitutes a riser reactor.

6. The apparatus of claims 2 to 5 wherein said deflection means extends across 10 to 30% of the cross section of said vertical elongated passageway.

7. The apparatus of claim 1 wherein said deflection means comprises a fluid inlet injection means selectively located juxtaposed or attached to said second side wall and situated to inject fluid in a direction substantially perpendicular to said vertical axis of said vertical elongated passageway and to project said fluid into said relatively horizontal elongated passageway, wherein said select location of said fluid inlet means is above said portion of said vertical elongated passageway located below said tee joint interconnection and below said portion of said vertical elongated passageway located above said tee joint interconnection.

8. The apparatus of claim 7 wherein said fluid inlet injection means comprises a means chosen from a gas injection nozzle, a bank of gas injection nozzles, contoured aperatures and perforated plates, or a means chosen from an atomization nozzle, a fog-pattern nozzle and a spray nozzle.

9. The apparatus of claims 7 or 8 wherein the spray pattern of said fluid injection means forms a pattern substantially commensurate with the cross section opening of said horizontal tee joint discharge tube at the point of communication of said discharge tube with said riser reactor elongated tube.

10. Process for reducing pressure drop in riser reactor having an upflow of catalyst and hydrocarbon vapours and being in open communication with a relatively horizontal tee joint connection passageway which comprises passing said catalyst and hydrocarbon vapours up through said riser reactor at a temperature of about 500 °C, especially 538 °C, to about 815 °C and a pressure of about 1 bar to about 100 bar to crack said hydrocarbons to smaller hydrocarbon molecules, passing said catalyst and said hydrocarbon vapour from said riser reactor to said tee joint connection passageway at an angle substantially perpendicular to said riser reactor wherein a mechanical implant has been placed at a point opposite the horizontal tee joint, or wherein fluid is injected through a fluid injection means, to said riser reactor, in a substantially perpendicular injection flow path with respect to the vertical axis of said riser reactor and in a flow path substantially parallel with respect to the horizontal axis of said tee joint connection passageway, the fluid preferably injected as a vapour at a velocity of 12 m/s to 182 m/s or as a liquid in relatively small droplets having a size of 100 to 500 microns and at a pressure drop of 3.5 to 7 bar.

## Patentansprüche

1. Eine Vorrichtung zum Durchleiten kombinierter Phasen einer Mischung aus einer Dampfphase und von feinen festen Teilchen im Aufstrom durch einen normalerweise im wesentlichen sich senkrecht erstreckenden Durchgang und zum zwangsweise Umleiten besagter kombinierter Phasen in einen normalerweise im wesentlichen sich horizontal erstreckenden Durchgang, welcher im wesentlichen rechtwinklig zu dem besagten sich senkrecht erstreckenden Durchgang angeordnet ist, und welche Vorrichtung die nachstehenden Einrichtungen und Teile umfaßt:

a) einen sich senkrecht erstreckenden Durchgang mit einer senkrechten Achse in einer im wesentlichen senkrecht ausgerichteten aufrechten Stellung, der zwei Seitenwände, einen nicht-durchlässigen Kopfteil und einen Bodenteil aufweist, wobei besagter Bodenteil von besagtem sich senkrecht erstreckenden Durchgang mit Einlaßeinrichtungen versehen ist, welche den Eintritt besagter Phasen in den besagten sich senkrecht erstreckenden aufrechten Durchgang ermöglichen;

b) einen sich relativ horizontal erstreckenden Durchgang, welcher im wesentlichen rechtwinklig zu dem besagten sich senkrecht erstreckenden Durchgang angeordnet ist und mit der ersten der besagten zwei Seitenwände des besagten sich senkrecht erstreckenden Durchgangs unter Bildung einer T-Stoßverbindung verbunden ist und offen kommuniziert, wobei ein Teil des besagten sich senkrecht erstreckenden Durchgangs unterhalb des besagten horizontalen Durchgangs und ein Teil des besagten sich senkrecht erstreckenden Durchgangs oberhalb des horizontalen Durchgangs gelegen ist, wobei der besagte obere Teil an besagtem nicht-durchlässigen Kopfteil endet, und wobei der besagte sich relativ horizontal erstreckende Durchgang an seinem anderen äußeren Ende mit einer Trenneinrichtung für die Festkörper-Dampfphase in Verbindung steht;

c) eine Ablenkungseinrichtung, welche sich an ausgewählter Stelle angrenzend an oder befestigt auf der zweiten der besagten zwei Seitenwände in einer Höhe befindet, welche mindestens so hoch ist wie der niedrigste Verbindungspunkt der besagten T-Stoßverbindung des besagten relativ horizontalen Durchgangs mit besagtem senkrechten Durchgang, und wobei die besagte Ablenkungseinrichtung die Wirkung hat, das von besagtem sich senkrecht erstreckenden Durchgang in besagten sich relativ horizontal erstreckenden Durchgang überführte Volumen an feinen festen Teilchen zu verbessern und einen Rückstrom der besagten feinen festen Teilchen aus demjenigen besagten Teil des besagten sich senkrecht erstreckenden Durchgangs, der als oberhalb des besagten sich relativ horizontal erstreckenden Durchgangs gelegen definiert ist, in denjenigen besagten Teil des besagten sich senkrecht erstreckenden Durchgangs, der als unterhalb des besagten sich horizontal erstreckenden Durchgangs gelegen definiert ist, zu verhindern.

2. Die Vorrichtung nach Anspruch 1, bei welcher die besagte Ablenkungseinrichtung ein an der zweiten Wand befestigtes und von ihr vorspringendes mechanisches Implantat ist und welches sich in ausgewählter Weise gegenüber dem besagten sich relativ horizontal erstreckenden Durchgang befindet, wobei der Mittelpunkt der Ablenkungsvorrichtung vorzugsweise an besagtem sich senkrecht erstreckenden Durchgang auf der gleichen Höhe angeordnet ist wie die Horizontalebene durch die zentrale Längsachse des besagten sich relativ horizontal erstreckenden Durchgangs.

3. Die Vorrichtung nach Anspruch 2, bei welcher die besagte Ablenkungseinrichtung sich an der zweiten der besagten beiden Seitenwände in einer Höhe befestigt und von der Wand aus vorspringend befindet, welche mindestens so tief liegt wie der höchste Vereinigungspunkt des relativ horizontalen Durchgangs mit besagtem senkrechten Durchgang.

4. Die Vorrichtung nach Anspruch 2 oder 3, bei welcher die besagte Ablenkungseinrichtung eine rechtwinklige planare Oberfläche mit einer halbkreisförmigen Rückseite zur Befestigung an der Innenseite des besagten sich senkrecht erstreckenden Durchgangs, ein rechtwinkliges Dreieck mit einer eine gekrümmte Linie mit konkaver Neigung bildenden Hypothenuse oder ein gleichseitiges Dreieck umfaßt, bei dem zwei gleiche Seiten von der Innenwand des besagten sich senkrecht erstreckenden Durchgangs vorspringen und gekrümmte Linien eine konkave Neigung bilden.

5. Die Vorrichtung nach den Ansprüchen 2 bis 4, bei welcher die besagte Ablenkungseinrichtung sich bis zu einer Entfernung erstreckt, welche bis zu einem Drittel des Durchmessers des sich senkrecht erstreckenden Durchgangs entspricht, der einen Steigrohr-Reaktor darstellt.

6. Die Vorrichtung nach den Ansprüchen 2 bis 5, bei welcher die besagte Ablenkungseinrichtung sich bis zu über 10% bis 30% des Querschnitts des sich senkrecht erstreckenden Durchgangs erstreckt.

7. Die Vorrichtung nach Anspruch 1, bei welcher die besagte Ablenkungseinrichtung eine Einlaß-Injektionseinrichtung für ein Fluid umfaßt, welche sich in ausgewählter Weise angrenzend an oder befestigt auf der besagten zweiten Seitenwand befindet und so angebracht ist, daß sie Fluid in einer Richtung im wesentlichen rechtwinklig zu besagter senkrechter Achse von besagtem sich senkrecht erstreckenden Durchgang injiziert und besagtes Fluid in den besagten sich relativ horizontal erstreckenden Durchgang ausstößt, wobei die ausgewählte lokale Anordnung für die besagte Fluid-Einlaßeinrichtung sich oberhalb desjenigen Teils des besagten sich senkrecht erstreckenden Durchgangs befindet, der unterhalb der besagten T-Stoßverbindung gelegen ist, und unterhalb desjenigen Teils des besagten sich senkrecht erstreckenden Durchgangs, der oberhalb der besagten T-Stoßverbindung gelegen ist.

8. Die Vorrichtung nach Anspruch 7, bei welcher die besagte Einlaß-Injektionseinrichtung für ein Fluid Mittel umfaßt, welche ausgewählt sind aus einer Gas-Injektionsdüse, einer Reihe (bank) von Gas-Injektionsdüsen, konturierten Öffnungen und perforierten Platten, oder ein Mittel, ausgewählt aus einer Zerstäubungsdüse, einer Nebel-Muster-Düse (fog-pattern nozzle) oder einer Sprühdüse.

9. Die Vorrichtung nach den Ansprüchen 7 oder 8, bei welcher das Sprühmuster der besagten Fluid-Injektionseinrichtung ein Muster bildet, welches im wesentlichen dem Querschnitt der Öffnung des besagten horizontalen T-Stoßverbindungsrohrs an dem Vereinigungspunkt des besagten Austragsrohrs mit dem besagten, als Steigrohr-Reaktor ausgebildeten, sich längs erstreckenden Rohr entspricht.

10. Verfahren zum Verringern des Druckabfalls in einem Steigrohr-Reaktor mit einem Aufstrom aus Katalysator und Kohlenwasserstoffdämpfen und welcher in offener Verbindung zu einem sich relativ horizontal erstreckenden T-Stoßverbindungsdurchgang befindet, welches die folgenden Maßnahmen umfaßt:

Hindurchleiten des besagten Katalysators und der Kohlenwasserstoffdämpfe in Aufwärtsrichtung durch den besagten Steigrohr-Reaktor bei einer Temperatur von zirka 500°C, insbesondere von 538°C, bis zu etwa 815°C und einem Druck von etwa 1 bar bis etwa 100 bar zwecks Cracken besagter Kohlenwasserstoffe zu kleineren Kohlenwasserstoffmolekülen, Leiten des besagten Katalysators und besagter Kohlenwasserstoffdämpfe von dem Steigrohr-Reaktor zu dem besagten T-Stoßverbindungsdurchgang in einem Winkel, der praktisch rechtwinklig zu dem besagten Steigrohr-Reaktor ist, wobei ein mechanisches Implantat an einer Stelle gegenüber der horizontalen T-Stoßverbindung angeordnet ist und wobei ein Fluid mittels einer Fluid-Injektionseinrichtung in einer Strombahn in den Steigrohr-Reaktor injiziert wird, welche praktisch einen rechten Winkel in bezug auf die senkrechte Achse des besagten Steigrohr-Reaktors bildet, wobei diese Strombahn im wesentlichen parallel in bezug auf die Horizontalachse des besagten T-Stoßverbindungsdurchgangs verläuft, wobei das Fluid vorzugsweise als ein Dampf mit einer Geschwindigkeit von 12 m/s bis 182 m/s oder als eine Flüssigkeit in Form von relativ kleinen Tröpfchen mit einer Größe von 100 bis 500 Mikron und bei einem Druckabfall von 3,5 bis 7 bar injiziert wird.

## Revendications

1. Un appareil pour faire passer des phases combinées d'un mélange d'une phase vapeur et de fines particules solides de bas en haut dans un passage allongé qui normalement est substantiellement vertical et pour obliger ces phases combinées à passer dans un deuxième passage allongé qui normalement est substantiellement horizontal placé substantiellement à angle droit par rapport au passage allongé vertical, cet appareil comprenant:

a) un passage allongé vertical ayant un axe vertical situé dans une position montante substantiellement verticale, ayant deux parois latérales, un sommet non perforé et un fond, où le fond de ce passage allongé est pourvu de moyens d'entrée pour permettre l'entrée desdites phases dans le passage allongé vertical;

b) un passage allongé relativement horizontal situé substantiellement à angle droit par rapport au passage allongé vertical, en interconnexion et en libre communication avec la première des deux parois latérales du passage allongé vertical pour former une connexion en T, où une portion du passage allongé vertical est située au-dessous du passage horizontal et une portion du passage allongé vertical est située au-dessus du passage horizontal, cette dernière portion se terminant au sommet non perforé, et le passage allongé relativement horizontal communique, à l'autre extrémité, avec un moyen de séparation des particules solides et de la phase vapeur; et

c) un moyen de déflexion situé sélectivement juxtaposé ou attaché à la deuxième paroi latérale à un niveau au moins aussi élevé que le point d'interconnexion le plus bas de la connexion en T du passage relativement horizontal avec le passage vertical, et où le moyen de déflexion agit pour aider au transfert des fines particules solides du passage allongé vertical au passage allongé relativement horizontal et pour empêcher l'écoulement en retour des fines particules solides de la portion du passage allongé vertical définie comme étant au-dessus du passage allongé relativement horizontal à la portion du passage allongé vertical définie comme étant au-dessous du passage horizontal.

2. L'appareil selon la revendication 1, dans lequel le moyen de déflexion est un implant mécanique attaché à la deuxième paroi et faisant saillie de cette paroi et situé sélectivement en face du passage allongé relativement horizontal, le centre du moyen de déflexion étant placé de préférence sur le passage allongé vertical à la même hauteur que le plan horizontal contenant l'axe longitudinal central du passage allongé relativement horizontal.

3. L'appareil selon la revendication 2, dans lequel le moyen de déflexion est situé, attaché à la deuxième des parois latérales et faisant saillie de cette paroi, à un niveau au moins aussi bas que le point d'interconnexion le plus élevé du passage relativement horizontal avec le passage vertical.

4. L'appareil selon la revendication 2 ou 3, dans lequel le moyen de déflexion comprend une surface plane à angle droit ayant un dos semi-circulaire pour fixation à l'intérieur du passage allongé vertical, un triangle rectangle avec l'hypothénuse comprenant une ligne courbe ayant une pente concave ou un triangle isocèle avec deux côtés égaux faisant saillie de l'intérieur du passage allongé vertical et des lignes courbes configurant une pente concave.

5. L'appareil selon les revendications 2 à 4, dans lequel le moyen de déflexion s'étend sur une distance allant jusqu'à un tiers du diamètre du passage allongé vertical qui constitue un réacteur vertical.

6. L'appareil selon les revendications 2 à 5, dans lequel le moyen de déflexion s'étend sur 10 à 30% de la section droite du passage allongé vertical.

7. L'appareil selon la revendication 1, dans lequel le moyen de déflexion comprend un moyen d'injection de fluide situé sélectivement juxtaposé ou attaché à la deuxième paroi latérale et situé de manière à injecter un fluide dans une direction substantiellement perpendiculaire à l'axe vertical du passage allongé vertical et à envoyer ce fluide dans le passage allongé relativement horizontal, où la position choisie du moyen d'injection de fluide se trouve au-dessus de la portion du passage allongé vertical située au-dessous de la connexion en T et au-dessous de la portion du passage allongé vertical située au-dessus de la connexion en T.

8. L'appareil selon la revendication 7, dans lequel le moyen d'injection de fluide comprend un moyen choisi parmi une buse d'injection de gaz, un banc de buses d'injection de gaz, des ouvertures profilées et des plaques perforées, ou un moyen choisi parmi une buse d'atomisation, une buse formant un brouillard et une buse de pulvérisation.

9. L'appareil selon la revendication 7 ou 8, dans lequel le modèle de pulvérisation du moyen d'injection de fluide forme une masse pulvérisée substantiellement de mêmes dimensions que la section d'ouverture du tube de décharge à connexion en T horizontale au point de communication de ce tube de décharge avec le tube allongé du réacteur vertical.

10. Un procédé pour réduire la chute de pression dans un réacteur vertical où il y a un écoulement de bas en haut de catalyseur et de vapeurs d'hydrocarbures et qui est en libre communication avec un passage à connexion en T relativement horizontale, selon lequel on fait passer le catalyseur et les vapeurs d'hydrocarbures de bas en haut dans le réacteur vertical à une température d'environ 500°C, spécialement 538°C, à environ 815°C et à une pression d'environ 1 bar à environ 100 bars afin de craquer les hydrocarbures en plus petites molécules d'hydrocarbures, on fait passer le catalyseur et les vapeurs d'hydrocarbures du réacteur vertical au passage à connexion en T substantiellement perpendiculaire au réacteur vertical, un implant mécanique ayant été placé à un point en face de la connexion en T horizontale, ou un fluide étant injecté par un moyen d'injection de fluide dans le réacteur vertical, avec une direction d'injection substantiellement perpendiculaire à l'axe vertical du réacteur vertical et substantiellement parallèle à l'axe horizontal à connexion en T, le fluide étant injecté de préférence sous la forme d'une vapeur à une vitesse de 12 m/s à 182 m/s ou sous la forme d'un liquide en gouttelettes relativement petites ayant des grosseurs de 100 à 500 $\mu$m et avec une chute de pression de 3,5 à 7 bars.

FIG.1
(PRIOR ART)

FIG.2

FIG.3

CAT/GAS

CAT/GAS

43D

41

43E

43C

42

44B

47

49

FLUID
RESERVOIR

45

TO CYCLONIC
SEPARATION

44A

43A

43B

FLUID/SOLIDS

FIG.4